# EUROPEAN PATENT SPECIFICATION

(11) **EP 2 671 476 B1**
(45) Date of publication and mention of the grant of the patent: **17.12.2014**
(21) Application number: 13170755.6
(22) Date of filing: 06.06.2013
(51) Int. Cl.: A47J 27/04, A47J 27/08, A47J 27/62

(54) **Insert for covers and/or containers for cooking foodstuff under vacuum**
Einsatz für Abdeckungen und/oder Behälter zum Kochen von Nahrungsmitteln unter Vakuum
Insert pour couvercles et/ou de récipients de cuisson d'aliments sous vide

(30) Priority: 08.06.2012 IT VR20120119
(43) Date of publication of application: 11.12.2013
(73) Proprietor: Tecla S.r.l., 37135 Verona (IT)
(72) Inventor: Schirò, Paoluccio, 37122 Verona (IT)
(74) Representative: Reniero, Cirillo Silvano

(56) References cited:
- DE-A1- 19 533 254
- FR-A1- 2 684 535
- US-A- 5 974 686

## Description

The present invention relates to an insert for covers and/or containers for cooking foodstuff under vacuum.

Food vacuum cooking is a cooking technique which consists in cooking food at relatively low temperatures, typically between 70° and 95° C, the food being pre-packed or wrapped in a package made of a polymeric material, typically polyethylene bags externally coated with nylon, wherein vacuum is obtained by any suitable means.

In order to ensure that food cooked under vacuum is properly cooked, it is necessary to verify that the temperature at the so-called food "core", i.e. in its innermost part, has reached and is kept at about 90° C for a predetermined time interval.

Vacuum cooking can be carried out in a humid environment (e. g. by boiling) in a steam or microwave oven, and provides the absence of direct contact of the foodstuffs being cooked, which remain in the package under vacuum, within the cooking environment, so as to avoid any loss of water from the food being cooked, which is thus maintained tender, besides keeping other desired characteristic features.

This cooking technique, which offers many advantages, suffers, however, from a drawback. The food to be cooked under vacuum, as stated above, is contained in packages made of polymeric material, in which the so-called "vacuum" is obtained by sucking air therefrom. Thus, the packages press the food contained therein, and adhere thereto.

Pressing exerted by the package under vacuum on the food contained therein alters, of course, the food aesthetics, e. g. by causing wrinkles or even tearings due to the shape taken in its packaged condition.

Containers for packaging and preservation of foodstuffs under vacuum are known, e. g. in the cold chain, and comprise a container body and a respective fluid tight cover. Such containers, typically made of stainless steel or a suitable plastic material, have a cover equipped with a contour seal for fluid-tight sealing at the cover side facing, in use, the container body, so that when the cover is placed in its closure position on its respective container body that is preferably provided with a suitably shaped upper edge, the seal is located between the rim of the container body and the cover, thereby ensuring a fluid-tight sealing. In such containers it is possible to preserve foodstuff.

In order to obtain a vacuum in such closed containers, a suitable insert is provided, at a through opening in the cover, preferably at a central area thereof. Such insert is typically made of plastic material and equipped with suitable valve means also made of plastic material which is more yieldable than the insert. Such valve means is designed to close/open a through opening formed in the insert, so that it is possible to suck air from the inside of the container with any suitable suction means, thereby obtaining a "vacuum" therein.

The above described container is, however, unsuitable for being used in vacuum cooking for the following reasons. First, the insert made of plastic material provided on the cover is unsuitable to withstand the typical temperatures of vacuum cooking and thus, it would be damaged during cooking.

It should also be stressed that, as mentioned above, in order to be sure that foodstuff cooked under vacuum has reached an appropriate cooking level, it is necessary to monitor the temperature at the food core and to ensure that it is maintained at about 90° C for a predetermined time interval which obviously depends on the foodstuff. With a container described above according to the state of the art is impossible to monitor the temperature of the food contained therein.

The main object of the present invention is, then, to provide an insert for a container suitable for containing foodstuff under vacuum, which insert makes the container usable for cooking under vacuum foodstuff placed therein, thereby solving the problem of being pressed, which occurs with conventional packages.

Another object of the present invention is to provide a cover designed to be coupled with a container body for foodstuff under vacuum, and to form therewith a container suitable for vacuum cooking.

A further object of the present invention is that of providing an insert, a cover and a container for cooking foodstuff under vacuum, which are simple to manufacture and can be manufactured at competitive costs.

Not the last object of the present invention is to provide a method of vacuum cooking that is easy to implement.

According to a first aspect of the present invention, these and other objects, which will become more apparent hereinafter, are achieved by an insert applicable to a closing cover for a container body suitable for containing foodstuff under vacuum, the insert comprising:
- a base wherein a first through opening is formed;
- at least one valve means housed in said first through opening and movable therein between an open position, in which air can flow through the through opening, and a closed position, in which air flow is prevented, characterized in that
the base comprises a second through opening and the insert comprises a closing and guiding group for temperature detection means, the closing and guiding group being housable into the second through opening of the base, the temperature detection means being removably insertable into the closing and guiding group.

According to a further aspect of the present invention there is provided a method of cooking foodstuff under vacuum, the method comprising the following operational steps:
- arranging at least one foodstuff to be cooked in a container body;
- applying a closing cover to the container body, thus obtaining a closed container;
- removing the cap or pin member from the closing and guiding group, thereby opening the through opening of the seal component;
- inserting a temperature detection means into the through opening within the closing and guiding group until it penetrates the foodstuff in the container body;
- obtaining a vacuum inside the closed container; and
- heating the closed container to a desired temperature for a predetermined time interval.

Further aspects and advantages of the present invention will better appear from the following detailed description of some currently preferred embodiments thereof, given by way of non-limiting examples in the accompanying drawings, in which:
Figure 1 shows a top view of a cover equipped with an insert according to the present invention;
Figure 2 is a side elevation view with parts in cross-section, taken along line II-II of the cover shown in Figure 1, and coupled to a respective container body;
Figure 3 shows an cross-sectional view on an enlarged scale, taken along line III-III, of the cover in Figure 1, the cover being equipped with an insert according to the present invention;
Figures 4 and 4a show a reduced scale side and top view, respectively, of a cap member of a closing and guiding group provided in the insert of Figure 3;
Figures 5 and 5a are a reduced scale side view, with parts in cross-section, and a top view, respectively, of a seal component of the closing and guiding group provided in the insert of Figure 3;
Figures 6, 6a and 6b show a reduced scale bottom view, side view, with parts in cross-section, and top view, respectively, of a valve means provided in the insert of Figure 3;
Figure 7 shows a lateral cross-sectional view of a portion of a container body provided with a closing and guiding group according to an embodiment, which does not fall within the scope of the present invention;
Figures 8 and 8a illustrate a top view and a side view, with parts in cross-section, respectively, of the seal component of the closing and guiding group of Figure 7;
Figures 9 and 9a illustrate a top and a side view, respectively, of a container comprising a container body and a respective cover for vacuum cooking foodstuff according to the present invention;
Figure 10 shows a container body provided with a respective cover, the cover being equipped with engagement means for the bottom of a second container body that can be stacked on the cover, according to a variation of the present invention; and
Figures 11 and 12 illustrate two steps of the vacuum cooking method according to the present invention.

In the accompanying drawings, identical or similar parts or components have been indicated with the same reference numerals.

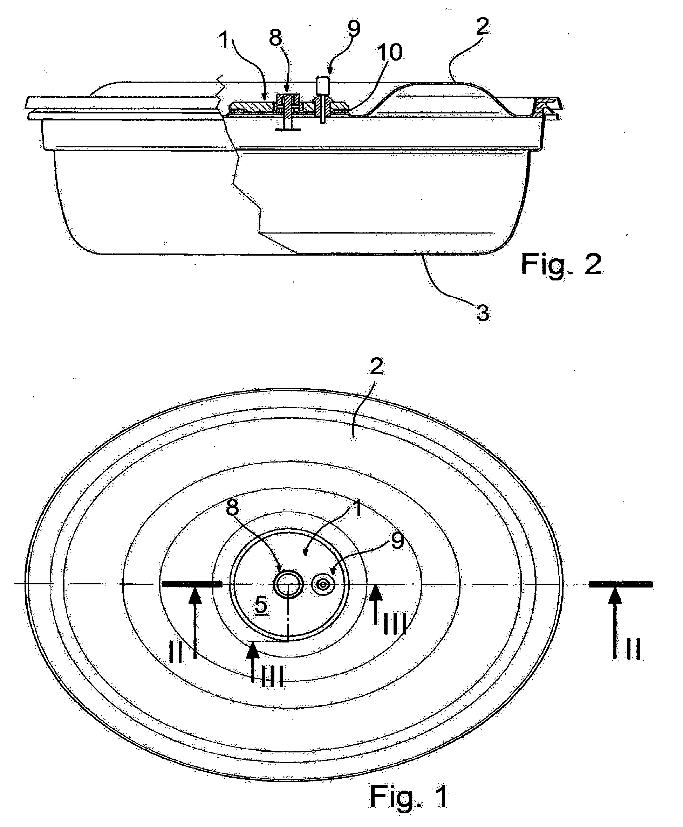

With reference first to Figures 1 to 3, it will be noted that an insert according to the present invention is designated by the reference numeral 1 and applicable to a cover 2, that can engage with a respective container body 3 designed to contain foodstuff under vacuum. The insert 1 is to be applied at a through opening 4 formed in the cover 2. The cover and the container body are typically made of stainless steel or pyrex glass.

Insert 1, e. g. a plate-like element, has a base 5 made of stainless steel or pyrex or another material that can withstand high pressures and high temperatures, and is typically circular or polygonal in shape of slightly larger overall dimensions than its respective opening 4 provided in the cover 2, so that, when the insert is mounted, in use, on the cover 2 at such opening 4, it is supported by the cover along the peripheral edge of its base 5.

The base 5 of the insert 1 has two through openings or holes 6 and 7: one, 6, being provided for housing a valve means 8, and the other, 7, being designed to house a closing and guiding group 9 for temperature detection means, as will be better explained hereinbelow.

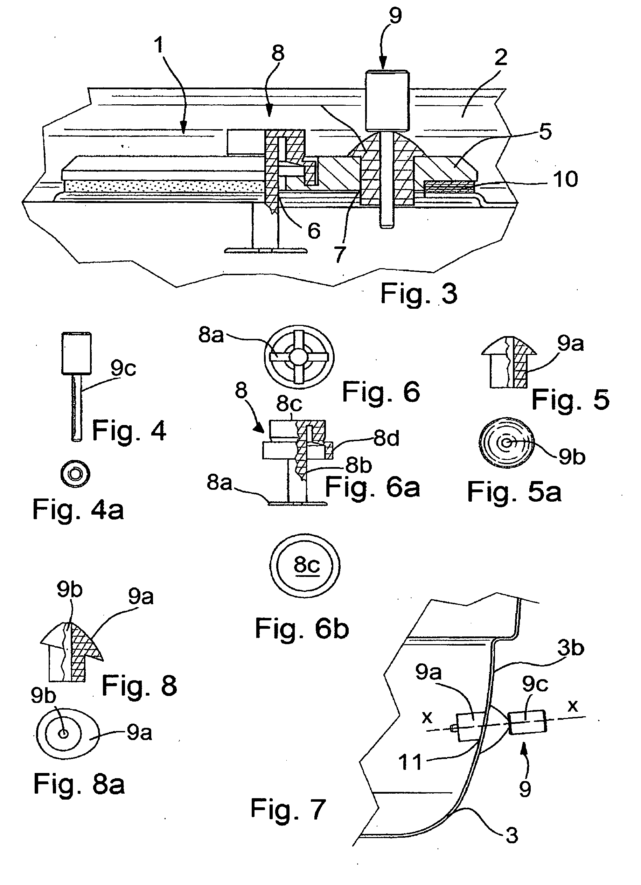

Figures 6 to 6b show the valve means 8 which can be inserted into the through opening 6. The valve means has a mushroom-like configuration and, at one, in use, lower end 8a thereof is provided with a base that is , e. g., cross-shaped, from which a stem-like body 8b extends upwards. The cross-shaped base 8a of the valve means has a plurality of tongues or arms, e. g., four arms angularly spaced from one another and radially extending with respect to the stem-like body 8b. The stem-like body 8b has a cross-section, e. g. circular, corresponding to the plan cross-section of the through opening 6 in the insert base 5.

At its other upper, in use, end, the valve means 8 has a bell-shaped head 8c, whose peripheral edge has a larger diameter than the plan dimensions of the through opening 6 in the base 5, and is shaped as a substantially cylindrical wall 8d extending coaxial with the longitudinal axis of the stem-like body 8b. Such cylindrical wall 8d is designed to be received in a respective recess 6b having a corresponding configuration and being obtained for that purpose in the base 5 around the through opening 6.

With such a configuration, the valve means 8 is insertable into the through opening 6 and can be moved along the longitudinal axis of said opening between a closed position, in which the cylindrical wall 8d of the valve means is inserted in the corresponding recess 6b and prevents air from flowing through the opening 6, and an open position, in which the head of the valve means is spaced from the base 5 with the cylindrical wall 8d not inserted in recess 6b and the lower cross-shaped end 8a of the valve means in contact with the base 5. As it will be noted, the cross-shaped base 8a of the valve means acts as a stop means for the valve means itself, which otherwise could easily disengage from the base 5.

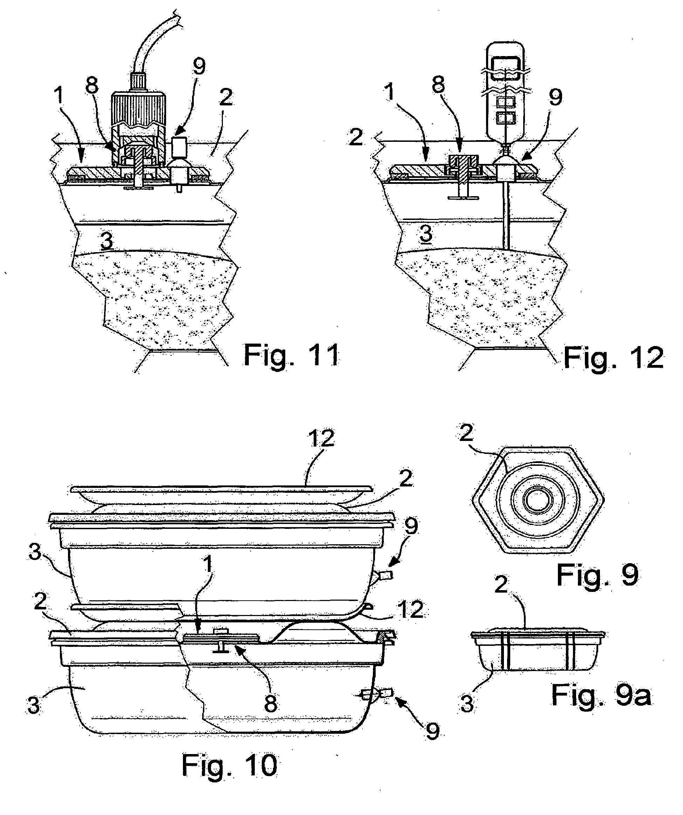

It is understood that when a container body 3 for food preservation is closed by the cover 2, to which the insert 1 of the present invention is applied, the through opening 6 and valve means 8 act as an air inlet/outlet for the container 3. In fact, a suitable air suction means, see for example Figure 11, can be applied at the through opening 6 and the valve means 8, to suck air from the closed container, until the valve means remains in its open position. When a reduced amount of air in the closed container and the resulting lower pressure therein than the atmospheric pressure cause the return of the valve means 8 in its closed position, the head 8c of valve means 8 is pushed into contact with the insert base 5, with its cylindrical wall 8d being inserted into the circular recess 6b of the base, whereas a vacuum will be obtained in the container.

Valve means 8 is preferably made of silicone material or any other material suitable for withstanding typical temperatures for vacuum cooking.

Advantageously, the insert 1 according to the present invention is equipped with a suitable gasket 10, which is provided in the base 5 at the area, in use, of contact with the cover 2, so as to ensure fluid-tight sealing between insert 1 and cover 2, and received in a suitable recess formed along the peripheral edge of the insert base 5. The gasket 10 is also made of silicone material or another material suitable for withstanding typical thermal shocks of vacuum cooking.

Going back to insert 1 according to the present invention, the through opening 7 provided in the base 5 acts as a receiving seat for a closing and guiding group 9 comprising a seal component 9a, typically made of silicone material or a material suitable for withstanding typical temperatures of vacuum cooking. Such a seal component 9a has a body having a cross-section slightly larger than that of the through opening 7, so that, once forced into the through opening, it remains firmly fixed thereto. The seal component 9a also has an upper, in use, externally flanged end, . Such external flange acts as an additional fixing means for the seal component 9a, which cannot then cross the base 5 of insert 1 from side to side.

A through opening 9b is also provided in the seal component 9a along its longitudinal axis, which is usually closed by a cap or pin member 9c inserted therein.

As it will be understood, when a so shaped insert 1 is applied to a closure cover 2 of a container body 3, the closing and guiding group 9 provides a fluid-tight closure of through opening 7, although, when necessary, it constitutes a convenient access path to the inside of the container itself, while also acting as an easy venting means allowing air to enter the container body 3.

If the container body 3, closed as described above, contains foodstuff to be cooked under vacuum, the opening 9b will act as an access for temperature detection means, typically a syringe or needle-shaped temperature probe - see Figure 12 - which can be inserted through the seal component 9a inside the container body 3 until it reaches the "core" of the foodstuff, thereby making it possible to (constantly) detect the temperature and to assess the cooking level thereof.

According to an embodiment, which does not fall within the scope of the present invention, shown in Figures 7 and 8, the closing and guiding group 9 will be provided in the container body 3, at a through opening 11 formed for this purpose in its side wall 3b along an axis X-X inclined with respect to the bottom of the container. The inclined configuration of the seal component 9a and its respective through opening 9b allows a needle-shaped temperature probe, when inserted into the container 3, to reach the foodstuff lying on the bottom.

A container body 3 for vacuum cooking according to a variation of the present invention can be equipped with support means, preferably having one or more levels or shelves, e. g. a grid supporting means, spaced from one another in height and designed to support a number of foodstuffs to be cooked under vacuum. In this way, clearly the amount of foodstuff that can be cooked in one container 3 is larger.

With particular reference now to Figure 10 and according to a variation of the present invention, it will be noted that the plan configuration of under vacuum container bodies 3 made of steel or pyrex, although varying, requires a flat and rounded bottom in the junction area with the side wall. Such configuration is due to construction requirements. Should the bottom be shaped in a different way, the vacuum inside the closed container and consequently the pressure exerted on it from outside would cause the container to collapse or break. However, in order to make a container comprising a container body 3 hermetically closed by a respective cover 2 according to the present invention, i. e. having a flat bottom, stackable, there is provided that the cover 2 optionally has at its outer, in use, face a continuous or at intervals edge element 12 corresponding to the contour of the bottom of a container body associable thereto.

Such an edge element 12 allows to receive and support, the bottom of another container 3 on the outer face of the cover 2, and to prevent lateral movements, thereby making it possible to stack them onto one another.

With an insert 1 according to the present invention and with the covers 2 and the containers 3 according to the variations described above, cooking food under vacuum becomes a very simple and practical operation.

First, the foodstuff to be cooked together with condiments is placed directly onto the bottom of the container body 3 or, if provided, onto suitable shelves spaced in height, and the container body is closed with a respective fluid-tight cover 2.

The cap or pin member 9c is extracted from the seal component and, as shown in Figure 12, the temperature probe is inserted into the core of the foodstuff through opening 9b in the closing group 9. If a number of foodstuffs are contained in the container body, one foodstuff will act as a sample and will be reached by the temperature probe.

By using suitable air suction means - see Figure 11 - air is sucked from the sealed container until the desired vacuum level is obtained therein.

The foodstuff contained in closed container is let cook in the oven at a predetermined temperature and for a predetermined time interval, until cooking is completed.

If the foodstuff to be cooked is already inside a closed container according to the present invention, in which vacuum has already been obtained, the cooking method will include a step where the cap or pin member is extracted 9c from the closing group 9, which results in the entry of a certain amount of air in the closed container, the amount of air varying according to the type of material of the seal component 9a and the elastic properties thereof. A temperature probe is then inserted into the opening 9b of the closing group until it enters into contact with, or is inserted into, the foodstuff, then vacuum is obtained inside the closed container by using air suction means, and finally the closed container is placed, as described above, in the oven at a predetermined temperature and for the predetermined time interval.

The insert, the cover and the container body as described above are susceptible to numerous modifications and variations within the scope of protection defined by the claims which follow.

## Claims

1. An insert, applicable to a closing cover (2) for a container body (3) suitable for containing foodstuff under vacuum, the insert comprising:
- a base (5) formed with a first through opening (6);
- at least one valve means (8) housed in said first through opening (6) and movable therein between an open position, in which air can flow through said through opening (6), and a closed position, in which air flow is prevented, **characterized in that** said base (5) comprises a second through opening (7) and said insert comprises a closing and guiding group (9) for temperature detection means, said closing and guiding group (9) being housed into said second through opening (7) of said base (5), said temperature detection means being removably insertable into said closing and guiding group (9).

2. An insert according to claim 1, wherein said closing and guiding group (9) comprises:- at least one seal component (9a) housed in said through opening (7) and having a through opening (9b);
and - at least one cap or pin member (9c) removably insertable into said through opening (9b) of said seal component (9a).

3. An insert according to claim 2, wherein said seal component (9a) has a body having a cross section corresponding to the plan section of said through opening (7) in said base (5), said through opening (9b) being formed at the longitudinal axis of said body, and an end thereof externally flanged for engaging with said base (5).

4. An insert according to any claim 1 to 3, wherein said valve means (8) is made of a material suitable for withstanding temperatures between 0 [deg.]C and 230 [deg.]C without becoming deteriorated.

5. An insert according to any claim 1 to 4, wherein said valve means (8) has mushroom-shaped configuration comprising a head portion (8c) having a peripheral edge (8d) engageable with said base (5).

6. An insert according to claim 5, wherein said peripheral edge (8d) of said head portion (8c) of said valve means (8) has a substantially circular configuration and is coaxial with the longitudinal axis of said valve means (8).

7. An insert according to claim 5 or 6, wherein a recess (6b) having configuration corresponding to that of said peripheral edge (8d) of said head portion (8c) of said valve means is provided in said base (5), said recess (6b) being designed to receive said peripheral edge (8d).

8. A closing cover for a container body (3) designed to contain foodstuff under vacuum, comprising an insert (1) according to any claim 1 to 7.

9. A cover according to claim 8, wherein said insert (1) is applied at a through opening (4) formed in said cover (2).

10. A cover according to any claim 8 to 9, having a side wall (12) at the external, in use, face (2a) thereof.

11. A cover according to claim 10, wherein said side wall (12) continuously extends correspondingly to the contour of the bottom of a container body associable thereto.

12. A cover according to claim 10, wherein said side wall extends at intervals correspondingly to the contour of the bottom of a container body associable thereto.

13. A container comprising a container body (3) and a closing cover (2) according to any claim 8 to 12.

14. A method of cooking foodstuff under vacuum comprising the following operational steps:- arranging at least one foodstuff to be cooked in a container body (3) according to claim 13; - applying a closing cover (2) according to any claim 8 to 12 to said container body (3), thus obtaining a closed container;
- removing said cap or pin member (9c) from said closing and guiding group (9), thereby opening the through opening (9b) of said seal component (9a);
- inserting a temperature detection means into said through opening (9b) within said closing and guiding group (9) until it penetrates the foodstuff in the container body (3);- obtaining vacuum inside the closed container; and
- heating the closed container at a desired temperature for a preset time interval.

15. A method of cooking under vacuum comprising the following operational steps:
- arranging a container body (3) according to claim 13 containing a foodstuff to be cooked and being closed by the respective closing cover (2) according to any claim 8 to 12, and in which a vacuum was previously obtained;
- removing said cap or pin member (9c) from said closing and guiding group (9), thereby opening the through opening (9b) of said seal component(9a);
- inserting a temperature detection means into said through opening (9b) in said closing and guiding means (9) until it penetrates the foodstuff located in the container body (3);
- obtaining a vacuum in said closed container; and
- heating the closed container to the desired temperature for a predetermined time interval.

## Patentansprüche

1. Einsatz für einen Verschlussdeckel (2) für einen Körper (3) eines Behälters, geeignet zur Aufnahme eines Nahrungsmittelprodukts unter Vakuum, wobei der Einsatz umfasst:
- einen mit einer ersten Durchgangsöffnung (6) ausgebildeten Grund (6);
- mindestens ein in der besagten ersten Durchgangsöffnung (6) aufgenommenes Ventil (8), das sich innen zwischen einer geöffneten Stellung, in der Luft durch die besagte Durchgangsöffnung (6) einströmen kann und einer geschlossener Stellung, in der eine Luftströmung verhindert wird, bewegen kann, **dadurch gekennzeichnet, dass** der besagte Grund (5) eine zweite Durchgangsöffnung (7) umfasst, und wobei der besagte Einsatz eine Verschluss-und Führungseinheit (9) für Temperaturerfassungsmittel umfasst, wobei die besagte Verschluss-und Führungseinheit (9) innerhalb der besagten zweiten Durchgangsöffnung (7) des besagten Grundes (5) aufgenommen werden kann, wobei die besagten Temperaturerfassungsmittel innerhalb der besagten Verschluss-und Führungseinheit (9) mit der Möglichkeit der Entfernung eingesetzt werden können.

2. Einsatz nach Anspruch 1, wobei die besagte Verriegelungs- und Führungseinheit (9) umfasst: - mindestens ein Dichtungsteil (9a) das in der besagten Durchgangsöffnung (7) untergebracht und mit einer Durchgangsöffnung (9b) versehen ist;
und - mindestens eine Kappe oder einen Stift (9c), die mit der Möglichkeit der Entfernung durch die besagte Durchgangsöffnung (9b) der besagten Dichtungskomponente (9a) eingeführt sind.

3. Einsatz nach Anspruch 2, wobei das besagte Dichtungsteil (9a) einen Körper aufweist, dessen Querschnitt dem Querschnitt in Drauf der besagten Durchgangsöffnung (7) in der besagten Basis (5) entspricht, wobei die besagte Durchgangsöffnung (9b) auf der Längsachse des besagten Körpers ausgebildet ist, und ein Ende davon ist außen angeflanscht, um mit der besagten Basis (5) zusammenzupassen.

4. Einsatz nach Ansprüchen 1 bis 3, **dadurch gekennzeichnet, dass** das besagte Ventil (8) aus einem geeigneten Material besteht, das Temperaturen von 0 [Grad] C bis 230 [Grad] C widersteht, ohne beschädigt zu werden.

5. Einsatz nach jedem der vorhergehenden Ansprüche 1 bis 4, wobei das besagte Ventil (8) eine pilzförmige Gestalt hat, die ein Kopfteil (8c) mit einem umlaufenden Rand (8d) aufweist, der mit der besagten Basis (5) verbunden werden kann.

6. Einsatz nach Anspruch 5, wobei der besagte umlaufender Rand (8d) des besagten Kopfteiles (8c) des besagten Ventils (8) eine im Wesentlichen kreisförmige Gestalt aufweist, und zur Längsachse des besagten Ventils (8) koaxial ist.

7. Einsatz nach Anspruch 5 oder 6, wobei in der besagten Basis (5) eine Vertiefung (6b) mit einer entsprechenden Gestalt zu der des besagten umlaufenden Randes (8d) des besagten Kopfteile (8c) des besagten Ventils, vorgesehen ist, wobei die besagte Vertiefung (6b) zum Aufnehmen des besagten umlaufenden Randes (8d) vorgesehen ist.

8. Verschlussdeckel für den Körper (3) eines Behälters, zum Aufnehmen ein Lebensmittelprodukt unter Vakuum, umfassend ein Einsatz (1) nach jedem der Ansprüche 1 bis 7.

9. Deckel nach Anspruch 8, wobei das besagte Einsatz (1) an einer im besagten Deckel (2) vorgesehenen Durchgangsöffnung (4) angewandt ist.

10. Deckel nach jeden der Ansprüche 8 bis 9, mit einer seitlichen Wandung (12) auf seiner Außenfläche (2a) während der Benutzung desselben.

11. Deckel nach Anspruch 10, wobei sich die besagte seitliche Wandung (12) kontinuierlich entsprechend dem Profil des Grundes des zugeordneten Körpers eines Behälters, erstreckt.

12. Deckel nach Anspruch 10, wobei sich die besagte seitliche Wandung in Abständen erstreckt, die dem Profil des Grundes eines zugeordneten Körpers eines Behälters entsprechen.

13. Behälter, umfassend einen Körper (3) eines Behälters und einen Verschlussdeckel (2) nach jedem der Ansprüche 8 bis 12.

14. Verfahren zum Kochen von Lebensmittelprodukten unter Vakuum, umfassend folgende Arbeitsschritte : - mindestens ein zu kochende Lebensmittelprodukt in einem Körper eines Behälters (3) nach Anspruch 13 einführen; - einen Verschlussdeckel (2) nach jedem der Ansprüche 8 bis 12 auf dem besagten Körper (3) des Behälters derart aufbringen, dass ein geschlossener Deckel erhalten wird; - die besagte Kappe oder Stift (9c) aus der besagten Verschluss- und Führungseinheit (9) derart entfernen, dass die Durchgangsöffnung (9b) des besagten Dichtungsteiles (9a) geöffnet wird;
- einen Temperaturerfassungsmittel in die besagte Durchgangsöffnung (9b) innerhalb der besagten Verschluss-und Führungseinheit (9) derart einführen, dass es das Lebensmittel innerhalb des Körpers des Behälters (3) durchdringt; - ein Vakuum im Inneren des geschlossenen Behälters erzeugen; und
- das geschlossenen Behälter bis eine gewünschte Temperatur für eine vorbestimmte Zeitdauer erwärmen.

15. Methode zum Kochen unter Vakuum, umfassend folgende Arbeitsschritte:
- den Körper eines Behälters nach Anspruch 13 anordnen, das ein zu kochendes Lebensmittelprodukt enthält und von dem entsprechenden Verschlussdeckel (2) nach jedem der Ansprüche 8 bis 12 verschlossen ist, und in der ein Vakuum früher erzeugt wurde;
- die besagten Kappe oder Stifte (9c) aus der besagten Verschluss-und Führungseinheit (9) entfernen, indem die Durchgangsöffnung (9b) des besagten Dichtungsteiles (9a) geöffnet wird;
- einen Temperaturerfassungsmittel in die besagte Durchgangsöffnung (9b) in der besagten Verschluss-und Führungseinheit (9) einführen, bis er durch das Lebensmittelprodukt dringt, das innerhalb des Körpers des Behälters gelegen ist;
- ein Vakuum innerhalb des besagten verschlossenen Behälters erzeugen, und
- das geschlossene Behälter bis zur gewünschten Temperatur für eine vorbestimmte Zeitdauer erzeugen.

## Revendications

1. Insert , applicable à un couvercle de fermeture (2) pour un corps de récipient (3) adapté pour contenir des produits alimentaires sous vide , l'insert comprenant :
- une base (5) formée avec une première ouverture de passage (6) ;
- au moins une soupape (8) logée dans ladite première ouverture de passage (6) et mobile en son intérieur entre une position ouverte, dans laquelle l'air peut passer à travers ladite ouverture de passage (6), et une position fermée , dans laquelle un flux d'air est empêché, **caractérisé en ce que** ladite base (5) comprend une deuxième ouverture de passage (7) e ledit insert comprend un groupe de fermeture et guidage (9) pour un moyen de détection de température, ledit groupe de fermeture et guidage (9) étant logé dans ladite ouverture de passage (7) de ladite base (5), ledit moyen de détection étant insérable de façon amovible dans ledit groupe de fermeture et guidage (9).

2. Insert selon la revendication 1, dans lequel ledit groupe de fermeture et guidage comprend : - au moins un élément d'étanchéité (9a) logé dans ladite ouverture de passage et muni d'une ouverture de passage (9b) ;
et au moins au moins un élément de couvercle ou broche insérée de façon amovible à travers ladite ouverture dudit élément d'étanchéité (9a).

3. Insert selon la revendication 2, dans lequel ledit élément d'étanchéité (9a) a un corps avec une section perpendiculaire à la section correspondante dans le plan de ladite ouverture de passage (7) dans ladite base (5), ladite ouverture de passage (9b) étant formée dans l'axe longitudinal dudit corps, et une extrémité de celle-ci étant bridée à l'extérieur pour coopérer avec ladite base (5).

4. Insert selon une quelconque des revendication 1 à 3, dans lequel ladite soupape (8) est formée par un matériau adapté pour résister à des températures entre 0 [degrés]C et 230 [degrés]C sans être détériorée.

5. Insert selon une quelconque des revendications 1 à 4, dans lequel ladite soupape (8) a une configuration en forme de champignon comprenant une partie de tête (8c) avec un bord périphérique (8d) couplé à ladite base (5).

6. Insert selon la revendication 5, dans lequel ledit bord périphérique (8d) de ladite portion de tête (8c) de ladite soupape (8) a une configuration sensiblement circulaire et est coaxiale avec l'axe longitudinal de ladite soupape (8).

7. Insert selon la revendication 5 ou 6, dans lequel une cavité 6b) avec une configuration correspondante à celle dudit bord périphérique (8d) de ladite partie de tête (8c) de ladite soupape est formée dans ladite base (5), ladite cavité (6b) étant destinée à recevoir ledit bord périphérique (8d).

8. Couvercle de fermeture pour un corps de récipient (3) adapté pour contenir des produits alimentaires sous vide, comprenant un insert (1) selon une quelconque des revendications 1 à 7.

9. Couvercle selon la revendication 8, dans lequel ledit insert (1) est appliqué à une ouverture de passage (4) formée dans ledit couvercle (2).

10. Couvercle selon une quelconque des revendications 8 à 9, avec une paroi latérale (12) sur la face extérieure (2a) de celui-ci, dans l'utilisation.

11. Couvercle selon la revendication 10, dans lequel ladite paroi latérale (12) s'étend en continu en correspondance avec le profil du fond d'un corps de récipient associable à celui-ci.

12. Couvercle selon la revendication 10, dans lequel ladite paroi latérale s'étend à des intervalles correspondant au profil du fond d'un corps de récipient associable à celui-ci.

13. Récipient comprenant un corps de récipient (3) et un couvercle de fermeture (2) selon une quelconque des revendications 8 à 12.

14. Méthode à cuire des produits alimentaires sous vide comprenant les suivantes opérations : - préparer au moins un produit alimentaire à cuire dans un corps de récipient (3) selon la revendication 13 ; - appliquer un couvercle de fermeture (2) selon une quelconque des revendications 8 à 12 au dit corps de récipient (3), obtenant ainsi un récipient fermé ; - retirer ledit bouchon ou broche (9c) dudit groupe de fermeture et guidage (9), ouvrant ainsi l'ouverture de passage (9b) dudit élément d'étanchéité (9a) ; - insérer un moyen de détection de température dans ladite ouverture de passage (9b) dans ledit groupe de fermeture et guidage (9) jusqu'à ce qu'il ne fait pas pénétrer le produit alimentaire dans le corps de récipient (3); - produire un vide dans le récipient fermé, et - chauffer le récipient fermé à une température souhaitée pendant un intervalle de temps prédéterminé.

15. Méthode à cuire sous vide comprenant les suivantes opérations :
- préparer un corps de récipient (3) selon la revendication 13 contenant un produit alimentaire à cuire et étant fermé par le respectif couvercle de fermeture (2) selon une quelconque des revendications 8 à 12, et dans lequel un vide a été obtenu précédemment ;
- retirer ledit bouchon ou broche (9c) dudit groupe de fermeture et guidage (9), en manière à ouvrir l'ouverture de fermeture (9b) dudit élément d'étanchéité (9a) ;
- insérer un moyen de détection de température dans ladite ouverture de passage (9b) dans ledit moyen de fermeture et guidage (9), jusqu'à ce qu'il pénètre dans le produit alimentaire situé dans le corps de récipient(3) ;
- produire un vide dans ledit récipient fermé ; et
- chauffer le récipient fermé jusqu'à la température souhaitée pendant un intervalle de temps prédéterminé.
